# EUROPÄISCHE PATENTSCHRIFT

(11) **EP 1 687 182 B1**
(45) Veröffentlichungstag und Bekanntmachung des Hinweises auf die Patenterteilung: **06.06.2007**
(21) Anmeldenummer: 04762736.9
(22) Anmeldetag: 03.09.2004
(51) Int. Cl.: B60R 21/01, B60R 21/34

(54) **VORRICHTUNG UND VERFAHREN FÜR EINEN AUFPRALLSCHUTZ BEI EINEM KRAFTFAHRZEUG**
IMPACT PROTECTION DEVICE AND METHOD FOR A MOTOR VEHICLE
DISPOSITIF ET PROCEDE POUR UNE PROTECTION EN CAS D'IMPACT POUR UN VEHICULE AUTOMOBILE

(30) Priorität: 25.11.2003 DE 10355344
(43) Veröffentlichungstag der Anmeldung: 09.08.2006
(73) Patentinhaber: Conti Temic microelectronic GmbH, 90411 Nürnberg (DE)
(72) Erfinder: BEUSCHEL, Michael, 85134 Stammham (DE); BURGMEIER, Raimund, 85049 Ingolstadt (DE); GÖRNIG, Thomas, 85229 Markt Indersdorf (DE); STEINER, Werner, 86529 Schrobenhausen (DE)
(86) Internationale Anmeldenummer: PCT/DE2004/001949
(87) Internationale Veröffentlichungsnummer: WO 2005/051726

(56) Entgegenhaltungen:
- EP-A- 0 937 612
- EP-A- 0 952 046
- DE-A- 10 141 730
- DE-A- 10 261 859
- DE-A- 10 261 870
- DE-A- 19 736 840
- FR-A- 2 810 944
- US-A- 5 936 549
- US-A1- 2003 105 569
- US-A1- 2004 030 476

## Beschreibung

Die Erfindung betrifft eine Vorrichtung für einen Aufprallschutz bei einem Kraftfahrzeug gemäss Anspruch 1 und ein entsprechendes Verfahren gemäss Anspruch 11.

Aufprallschutzsysteme für Fußgänger sollen die Unfallfolgen eines Zusammenstosses zwischen einem Kraftfahrzeug und einem Fußgänger abmildern. Als passive Aufprallschutzsysteme werden beispielsweise besonders gestaltete Fronthauben bei Kraftfahrzeugen eingesetzt, die im Falle eines Fussgänger-Aufpralls einen Aufprall abmildern sollen.

Als aktive Maßnahmen für einen Aufprallschutz sind derzeit Fußgänger-Airbags und das Anheben der Motorhaube eines Kraftfahrzeugs bei einem Aufprall vorgesehen. Dadurch soll die Schwere eines Flussgänger-Aufpralls durch eine Dämpfung gemindert werden. Zudem sollen die im "European Enhanced Vehicle-Safety Committee" (EEVC) WG17 geforderten Werte für das HPC (Head Performance Criterion) von kleiner 1000 eingehalten werden. Der aktive Aufprallschutz wird durch eine Aufpralldetektionssensorik und ein Aufprallschutzsystem erreicht, das im Falle eines Aufpralls automatisch Fußgänger-Airbags zündet und/oder die Motorhaube des Kraftfahrzeugs anhebt. Problematisch bei einem derartigen System ist allerdings, dass keine Zündung der Fußgänger-Airbags und Anhebung der Motorhaube bei einem normalen Zusammenstoß ohne Beteiligung eines Fußgängers erfolgen sollte, d.h. bei einem Zusammenstoss mit einem harten Objekt wie einem Baum, einer Mauer oder einem anderen Fahrzeug.

Aufgabe der vorliegenden Erfindung ist es daher, eine Vorrichtung und ein Verfahren für einen Aufprallschutz bei einem Kraftfahrzeug vorzuschlagen, die geeignet sind, einen Zusammenstoss mit einem Fußgänger zu erkennen.

Die EP 0 937 612 A offenbart eine:
Vorrichtung für einen Aufprallschutz bei einem Kraftfahrzeug mit mindestens einem Aufprallsensor (1),
mindestens einem Abstandsensor (202),
einem am außenbereich des Kraftfahrzeugs (100v) wirkenden aktiven Aufprallschutzsystem (71), und
einer Steuereinrichtung (7,25,26,27,28), die zum Verarbeiten von Signalen des mindestens einen Aufprallsensors (1) und des mindestens einen Abstandssensors (202) und zum Steuern des Aufprallschutzsystems (71) derart ausgebildet ist, daß sie nach Detektion eines Aufpralls durch den mindestens einen Aufprallsensor (1) ein Signal des mindestens einen Abstandsensors (202) analysiert wird und das Aufprallschutzsystem (71) aktiviert.

Diese Aufgabe wird durch eine Vorrichtung für einen Aufprallschutz bei einem Kraftfahrzeug mit den Merkmalen von Anspruch 1 und ein entsprechendes Verfahren mit den Merkmalen von Anspruch 11 gelöst. Bevorzugte Ausgestaltungen der Erfindung ergeben sich aus den abhängigen Ansprüchen.

Ein wesentlicher Gedanke der Erfindung besteht darin, mindestens ein Signal eines Abstandssensors für die Analyse eines Aufpralls einzusetzen. Insbesondere anhand des Verlaufs eines Signals des Abstandssensors bei einem Aufprall soll erkannt werden, ob ein Zusammenstoss eines Kraftfahrzeugs mit einem harten Objekt oder einem weichen Objekt wie einem Fußgänger stattgefunden hat. Es hat sich gezeigt, dass ein Aufprall eines weichen Objekts wie einer Person einen charakteristischen Signalverlauf eines Abstandssensorsignals ergibt, da die Person bei einem Aufprall in den meisten Fällen einknickt und sich daher dem Kraftfahrzeug auch nach dem Aufprall noch nähert, während dies bei einem harten Objekt wie einem Baum oder einer Mauer üblicherweise nicht der Fall ist. Aufgrund dieses "Folding effects", d.h. des Einknickens eines Aufprallobjekts kann darauf geschlossen werden, ob es sich um ein weiches einknickendes Objekt wie einen Fußgänger oder ein hartes nicht einknickendes Objekt handelt. Die Erfindung nutzt also charakteristische Unterschiede zwischen dem Zusammenstoss mit einem weichen Objekt wie einem Fußgänger und mit einem harten Objekt wie einem Baum, einer Mauer oder einem anderen Fahrzeug aus, um ein sicheres Auslösen bzw. Aktivieren eines aktiven Aufprallschutzsystems wie z.B. einem Fußgänger-Airbag oder einer Anhebevorrichtung für die Motorhaube zu gewährleisten. Durch die Verarbeitung von Signalen, die von mindestens zwei unabhängigen und auf unterschiedlichen Technologien basierenden Detektionssystemen stammen - Aufprallsensor und Abstandssensor - , kann die Sicherheit beim Aktivieren eines Aufprallschutzsystems wesentlich verbessert werden, insbesondere die Gefahr eines unerwünschten Aktivierens eines Fussgängerschutz-Systems bei einem Zusammenstoss mit einem harten Objekt verringert werden.

Die Erfindung betrifft eine Vorrichtung für einen Aufprallschutz bei einem Kraftfahrzeug, mit mindestens einem Aufprallsensor, mindestens einem Abstandssensor, einem am Außenbereich des Kraftfahrzeugs wirkenden aktiven Aufprallschutzsystem, und einer Steuereinrichtung, die zum Verarbeiten von Signalen des mindestens einen Aufprallsensors und des mindestens einen Abstandssensors und zum Steuern des Aufprallschutzsystems derart ausgebildet ist, dass sie nach Detektion eines Aufpralls durch den mindestens einen Aufprallsensor für eine vorgegebene Zeitdauer ein Signal des mindestens einen Abstandssensors auswertet und davon abhängig das Aufprallschutzsystem steuert.

Die Steuereinrichtung ist in einer bevorzugten Ausführungsform derart ausgebildet, dass sie nach der Detektion des Aufpralls durch den mindestens einen Aufprallsensor ein Messzeitfenster aktiviert, in dem ein Signal des mindestens einen Abstandssensors analysiert wird.

Vorzugsweise wird das Messzeitfenster abhängig von der Geschwindigkeit des Kraftfahrzeugs und/oder eines Objekts eingestellt, mit dem ein Aufprall stattfinden wird. Dadurch kann die Genauigkeit der Auswertung des Signals des Abstandssensors verbessert werden, da der Unfallverlauf, insbesondere das "Einknicken" des Objekts, z.B. einer Person abhängig von der Geschwindigkeit sowohl des Kraftfahrzeugs als auch des Objekts ist. Durch ein variables Messzeitfenster kann die Vorrichtung daher besser auf verschiedene geschwindigkeitsabhängige Unfallverläufe eingestellt werden.

Die Steuereinrichtung kann auch derart ausgebildet sein, dass nach Detektion eines Aufpralls bei Unterschreiten eines vorgegebenen Abstandes zum Aufprallobjekt das Aufprallschutzsystem aktiviert wird.

In einer besonders bevorzugten Ausführungsform weist der mindestens eine Abstandssensor mindestens zwei Empfangsoptiken auf, die unterschiedlich ausgerichtete Empfangsbereiche besitzen. Es hat sich als ein guter Kompromiss zwischen technischem Aufwand und hoher Sicherheit herausgestellt, drei Empfangsoptiken mit drei unterschiedlich ausgerichteten Empfangsbereichen zu verwenden.

Hierbei kann ein erster Empfangsbereich, ein zweiter Empfangsbereich in einem Winkel von etwa +15° in Bezug auf den ersten Empfangsbereich und ein dritter Empfangsbereich in einem Winkel von etwa -15° in Bezug auf den ersten Empfangsbereich vorgesehen sein.

Vorzugsweise überlappen sich die Empfangsbereiche derart, dass alle Empfangsbereiche einen lückenlosen Empfangsbereich bilden.

Insbesondere sind mindestens zwei Empfangsbereiche in der horizontalen Ebene des Kraftfahrzeugs nebeneinander angeordnet. Dadurch kann ein relativ breiter Empfangsbereich erzielt werden, der beispielsweise den gesamten Frontbereich eines Kraftfahrzeugs überdecken kann. Vor allem ist ein derart breiter Empfangsbereich zur Klassifikation der Breite von einem Objekt geeignet, insbesondere zur Klassifikation eines Menschen oder eines anderen Objekts wie eines Kraftfahrzeugs, einer Mauer oder dergleichen Hindernisses, das breiter als ein Mensch ist.

Zusätzlich oder auch alternativ können mindestens zwei Empfangsbereiche in der vertikalen Ebene des Kraftfahrzeugs nebeneinander angeordnet sein. Hierdurch kann die Detektionsgenauigkeit erhöht werden, da der Abstandssensor über einen durch die mindestens zwei in vertikaler Richtung übereinander angeordneten Empfangsbereiche gebildeten Gesamtempfangsbereich verfügt. Die Höhe eines Empfangsbereichs spielt insbesondere für die Klassifikation der Höhe eine Objekts eine wesentliche Rolle. Auch dies kann für die Detektion eines Aufpralls mit einem Menschen sehr wichtig sein. Beispielsweise kann durch die Klassifikation der Höhe unterschieden werden zwischen Objekten, die etwa die Grösse eines Menschen oder eines anderen Objekts wie eines Baumes oder einer hohen Mauer besitzen.

Vorzugsweise umfasst das am Außenbereich wirkende aktive Aufprallschutzsystem eine Anhebevorrichtung und/oder einen Fußgänger-Airbag.

Ferner betrifft die Erfindung ein Verfahren für einen Aufprallschutz bei einem Kraftfahrzeug, bei dem ein am Außenbereich des Kraftfahrzeugs wirkendes aktives Aufprallschutzsystem abhängig von einem Signal mindestens eines Abstandssensors und einem Signal mindestens eines Aufprallsensors aktiviert wird.

Insbesondere wird nach Detektion eines Aufpralls durch den mindestens einen Aufprallsensor ein Messzeitfenster aktiviert, in dem ein Signal des mindestens einen Abstandssensors analysiert wird.

Um die Genauigkeit der Auswertung des Signals des Abstandssensors für eine sichere Unterscheidung eines Aufpralls eines weichen von einem harten Objekt zu verbessern, kann das Messzeitfenster abhängig von der Geschwindigkeit des Kraftfahrzeugs und/oder eines Objekts eingestellt werden, mit dem ein Aufprall stattfinden wird.

Vorzugsweise wird nach Detektion eines Aufpralls bei Unterschreiten eines vorgegebenen Abstandes zum Aufprallobjekt das Aufprallschutzsystem aktiviert. In diesem Fall ist es fast sicher, dass ein Einknicken des Aufprallobjekts stattgefunden hat und es sich mit hoher Wahrscheinlichkeit um ein weiches Objekt handelt.

Zur Verbesserung der Genauigkeit der Detektion des Aufprallobjekts und um einen möglichst grossen Empfangsbereich für den Abstandssensor zu erhalten kann der mindestens eine Abstandssensor Empfangssignale aus mindestens zwei unterschiedlich ausgerichteten Empfangsbereichen empfangen. Vorzugsweise sind drei Empfangsbereiche vorgesehen, da sich dies als ein guter Kompromiss zwischen technischem Aufwand und hohem Sicherheitsstandard herausgestellt hat.

Insbesondere werden Empfangssignale aus einem ersten Empfangsbereich, aus einem zweiten Empfangsbereich in einem Winkel von etwa +15° in Bezug auf den ersten Empfangsbereich und aus einem dritten Empfangsbereich in einem Winkel von etwa -15° in Bezug auf den ersten Empfangsbereich empfangen. Eine derartige Ausrichtung von Empfangsbereichen hat sich für eine sichere Detektion des Aufprallobjekts und einer zuverlässigen Aktivierung des Aufprallschutzsystems als besonders geeignet erwiesen.

Vorzugsweise überlappen sich die Empfangsbereiche derart, dass alle Empfangsbereiche einen lückenlosen Empfangsbereich bilden.

Insbesondere sind mindestens zwei Empfangsbereiche in der horizontalen Ebene des Kraftfahrzeugs nebeneinander angeordnet. Wie bereits oben erläutert hat dies Vorteile bei der Klassifikation von Objekten.

Zusätzlich oder auch alternativ können mindestens zwei Empfangsbereiche in der vertikalen Ebene des Kraftfahrzeugs nebeneinander angeordnet sein. Wie bereits oben erläutert hat dies Vorteile bei der Klassifikation von Objekten.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in der Zeichnung werden die in der hinten angeführten-Liste der Bezugszeichen verwendeten Begriffe und zugeordneten Bezugszeichen verwendet.

Die Erfindung wird nun anhand von Ausführungsbeispielen in Verbindung mit den Zeichnungen erläutert. Die Zeichnungen zeigen in
- Fig. 1: ein erstes Ausführungsbeispiel der erfindungsgemäßen Vorrichtung für einen Aufprallschutz bei einem Kraftfahrzeug am Beispiel eines Frontalzusammenstosses mit einer Person;
- Fig. 2: ein Diagramm mit qualitativen Signalverläufen eines Abstands bzw. cV (closed velocity)-Sensors bei dem in Fig. 1 dargestellten Zusammenstoss; und
- Fig. 3: ein zweites Ausführungsbeispiel der erfindungsgemäßen Vorrichtung für einen Aufprallschutz bei einem Kraftfahrzeug, bei dem drei Empfangsbereiche in der horizontalen Ebene des Kraftfahrzeugs nebeneinander überlappend angeordnet sind.

Im Folgenden können funktional gleiche und/oder gleiche Elemente mit den gleichen Bezugsziffern bezeichnet sein.

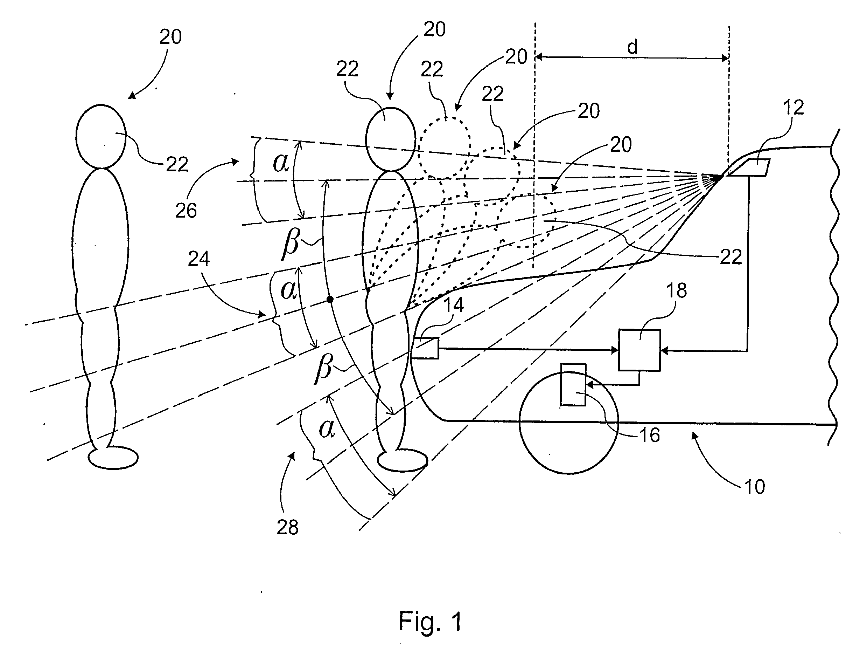

In Fig. 1 ist ein Zusammenstoß eines Kraftfahrzeugs 10 mit einer Person 20 dargestellt. Bei einem derartigen Zusammenstoß "knickt" die Person 20 in der Regel ein und prallt mit ihrem Kopf 22 auf die Motorhaube des Kraftfahrzeugs 10 auf. Um die dadurch möglicherweise entstehenden Kopfverletzungen abzumildern, weist das Kraftfahrzeug 10 ein aktives Aufprallschutzsystem auf. Die Funktion eines solchen Aufprallschutzsystems besteht im Wesentlichen darin, im Falle eines Zusammenstoßes des Kraftfahrzeugs 10 mit einer Person 20 innerhalb von Bruchteilen von Sekunden beispielsweise einen oder mehrere im Bereich der Motorhaube des Kraftfahrzeugs 10 vorgesehene Außen- oder Fußgänger-Airbags zu zünden und/oder einen Bereich des Kraftfahrzeugs anzuheben, im dargestellten Ausführungsbeispiel die Motorhaube des Kraftfahrzeugs, so dass eine nachgebende Knautschzone für einen Aufprall des Kopfes 22 der Person 20 auf der Motorhaube geschaffen wird.

Zur Detektion eines Aufpralls ist hierzu ein Aufprallsensor 14 vorgesehen, der beispielsweise wie in Fig. 1 dargestellt im Bereich des vorderen Stoßfängers des Kraftfahrzeugs untergebracht sein kann. Der Aufprallsensor 14 kann beispielsweise parallel liegende Lichtwellenleiter umfassen, die mit einer speziellen Schicht außen verspiegelt sind. An mehreren Messstellen ist diese Schicht offen, so dass eine vorgegebene Menge an Licht, das in die Lichtwellenleiter eingespeist wird, austreten kann. Im Falle eines Zusammenstoßes mit einem Objekt werden die Lichtwellenleiter verbogen und es ändert sich die Menge des aus den Lichtwellenleitern an den offenen Stellen der Schicht austretenden Lichts. Dementsprechend ändert sich auch die Intensität des durch die Lichtwellenleiter geführten Lichts, was mittels Photodioden detektiert werden kann. Diese Lichtintensitätsänderung wird von einem Steuergerät 18 des aktiven Aufprallschutzsystems detektiert und verarbeitet. Im Stand der Technik aktiviert das Steuergerät 18 nach einer Detektion einer bestimmten Lichtintensitätsänderung eine im Bereich der Stoßdämpfer der vorderen Räder des Kraftfahrzeugs 10 vorgesehene Anhebevorrichtung 16, welche innerhalb von Sekundenbruchteilen den Frontbereich des Kraftfahrzeugs 10 anhebt, so dass die Folgen des Zusammenpralls zwischen Kraftfahrzeug 10 und Person 20 abgemildert werden.

Das Steuergerät 18 verarbeitet nach der Erfindung jedoch nicht nur das Signal des Aufprallsensors 14, sondern auch ein Signal eines cV-Sensors 12, der als Abstandssensor eingesetzt wird. Der cV-Sensor 12 ist im Bereich des Rückspiegels an der Frontscheibe des Kraftfahrzeugs 10 angebracht und misst den Abstand d zu einem Objekt in mehreren Empfangsbereichen. Er besitzt drei unterschiedlich ausgerichtete Empfangsbereiche 24, 26 und 28. Die drei Empfangsbereiche werden durch entsprechend unterschiedlich ausgerichtete Empfangsoptiken des cV-Sensors 12 erzielt. Jeder der Empfangsbereiche besitzt einen öffnungswinkel α von etwa 15°. Der zweite und dritte Empfangsbereich 26 bzw. 28 ist in einem Winkel β von etwas mehr als etwa +15° bzw. etwa -15° zum ersten Empfangsbereich 24 in der vertikalen Ebene des Kraftfahrzeugs 10 angeordnet, so dass die drei Bereiche mit kleinen Lücken nebeneinander in der vertikalen Ebene liegen und einen grossen Empfangsbereich mit einem Öffnungswinkel von mehr als etwa 45° in der vertikalen Ebene bilden. Die Bereiche sind in der Fig. 1 gestrichelt dargestellt. Für jeden der drei Empfangsbereiche 24, 26 und 28 erzeugt der cV-Sensor 12 ein eigenes Signal 30, 32 bzw. 34, das jeweils dem Steuergerät 18 zugeführt wird.

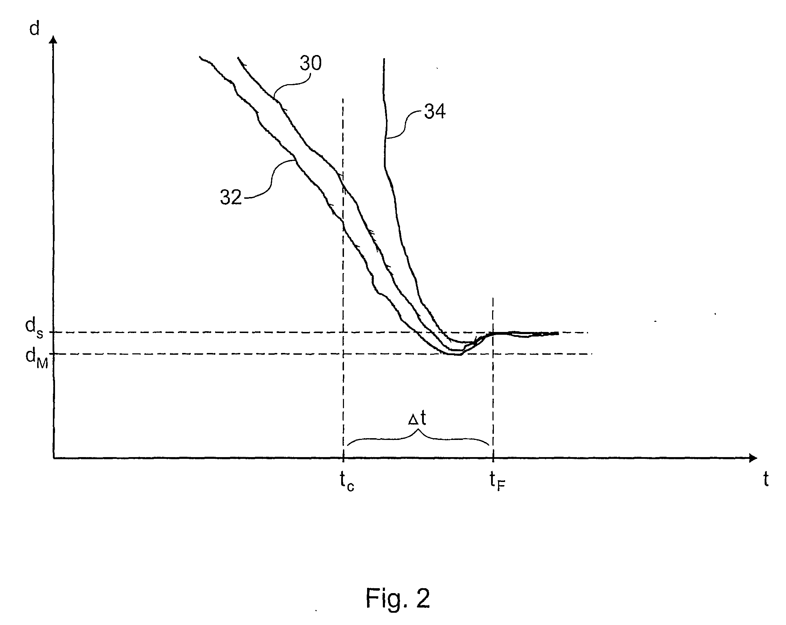

Der qualitative Verlauf der drei verschiedenen Signale 30, 32 und 34 bei einem Aufprall einer Person 20 auf einer Motorhaube ist in Fig. 2 dargestellt. Im Diagramm der Fig. 2 ist der Verlauf der Signale über der Zeit dargestellt; jedes Signal spiegelt prinzipiell den Abstand d eines Objekts zum cV-Sensor 12 im entsprechenden Empfangsbereich wieder. Der Zeitpunkt des Zusammenstosses t_{c} entspricht etwa dem Zeitpunkt, wenn der Aufprallsensor 14 einen ersten Kontakt mit der Person detektiert.

Im Zeit raum vor dem Aufprall (t < t_{c}) ist zu erkennen, dass sich das erste cV-Sensorsignal 30 aus dem ersten Empfangsbereich 24 und das zweite cV-Sensorsignal 32 aus dem zweiten Empfangsbereich 26 entsprechend der sich dem Kraftfahrzeug 10 nähernden Person ändert. Im dritten Empfangsbereich 28 wird dagegen kein Objekt detektiert, so dass das dritte cV-Sensorsignal 34 einen "unendlich grossen" Abstand d wiedergibt.

Kurz nach dem Aufprall zum Zeitpunkt t_{c} verändern sich das erste und zweite cV-Sensorsignal 30 bzw. 32 derart, dass sich die Person 20, genauer gesagt deren Oberkörper bzw. Kopf 22 dem cV-Sensor 12 weiter nähert, da sie einknickt. Ferner gelangt der Kopf 22 der Person 20 in den dritten Empfangsbereich, so dass das dritte cV-Sensorsignal 34 einen sich schnell verringernden Abstand zwischen der Person 20, genauer gesagt deren Kopf 22 und dem cV-Sensor 12 detektiert.

Danach verlaufen die drei cV-Sensorsignale 30, 32 und 34 ähnlich. Insbesondere ist am Verlauf dieser Signale zu erkennen, dass sich auch nach dem Aufprall das Objekt auf Grund eines "Folding effects", d.h. eines Einknickens (in Fig.1 durch die gestrichelt dargestellte einknickende Person 20 verdeutlicht) dem cV-Sensor 12 weiter nähert bis zu einem bestimmten minimalen Abstand d_{M}. Danach erhöht sich wieder der durch den cV-Sensor 12 detektierte Abstand zwischen der Person 20 und dem cV-Sensor 12, was dadurch erklärt werden kann, dass nach dem Aufprall des Kopfes 22 der Person 20 auf der Motorhaube der Kopf 22 sich wieder entfernt.

Im Folgenden wird nun erläutert, wie das Steuergerät 18 die Signale des cV-Sensors 12 verarbeitet und in das Konzept des aktiven Aufprallschutzsystems einfließen lässt. Während wie oben erläutert bisher beim Stand der Technik alleine der Aufprallsensor 14 über das Steuergerät 18 die Anhebevorrichtung 16 aktiviert, geht nun gemäß der Erfindung auch das Signal oder gehen die Signale 30, 32 und 34 des cV-Sensors 12 in die Auswertung und vor allem Aktivierung der Anhebevorrichtung 16 mit ein.

Sobald der Aufprallsensor 14 einen Aufprall eines Objekts wie einer Person 20 zum Zeitpunkt t_{c} (Fig. 2) detektiert, d.h. ein entsprechendes Signal an das Steuergerät 18 sendet, oder das Steuergerät 18 anhand des Ausgangssignals des Aufprallsensors 14 den Aufprall detektiert, wird ein Messzeitfenster Δt (siehe Fig. 2) vom Steuergerät aktiviert, in dem die Signale 30, 32 und 34 des cV-Sensors 12 im Steuergerät 18 auf einen charakteristischen Verlauf, wie er beim "folding effect" auftritt, analysiert werden. Das Messzeitfenster Δt kann z.B. durch einen Timer implementiert werden, der zum Zeitpunkt t_{c} gestartet und nach Ablauf einer vorgegebenen Zeitdauer zum Zeitpunkt t_{F} gestoppt wird. Der Timer kann ein logisches Signal erzeugen, das eine Analyse der cV-Sensorsignale 30, 32 und 34 ermöglicht, z.B. einen Komparator für einen Schwellwertvergleich im Steuergerät 18 freischaltet.

Im Detail wertet das Steuergerät 18 die Signale 30, 32 und 34 des Abstandssensors 12 aus, indem es analysiert, ob sich dem cV-Sensor 12 weiterhin ein Objekt, im vorliegenden Fall der Oberkörper und insbesondere der Kopf 22 der Person 20 nähert. Wird eine Objektannäherung innerhalb des Messzeitfensters detektiert, so aktiviert das Steuergerät 18 die Anhebevorrichtung 16, die innerhalb von Sekundenbruchteilen die Motorhaube des Kraftfahrzeugs 10 anhebt.

Anhand des in Fig. 2 dargestellten typischen Signalverlaufs bei einem Aufprall eines einknickenden weichen Objekts kann beispielsweise das Steuergerät 18 einen einfachen Schwellwertvergleich mittels des bereits erwähnten im Messzeitfenster Δt freigeschalteten Komparators vornehmen. Unterschreitet eines oder mehrere der Signale 30, 32 und 34 des cV-Sensors 12 einen vorgebebenen Abstand dₛ innerhalb des Messzeitfensters Δt, wird die Anhebevorrichtung 16 aktiviert, andernfalls erfolgt keine Aktivierung, da ein Zusammenstoss mit einem harten Objekt vorzuliegen scheint.

Die oben erläuterte Verarbeitung der Signale des cV-Sensors 12 kann auch beispielsweise durch eine im Steuergerät 18 enthaltene Software implementiert werden. Hierzu werden die analogen Signale des cV-Sensors 12 digitalisiert mittels eines Analog-Digital-Wandlers und von einem entsprechend programmierten Signalprozessor oder Mikroprozessor weiterverarbeitet.

Durch die Einbeziehung der cV-Sensorsignale 30, 32 und 34 in die Entscheidung zur Aktivierung der Anhebevorrichtung zum Schutz von Personen kann die Sicherheit einer derartigen aktiven Aufprallschutzvorrichtung weiter verbessert werden. Im Falle der alleinigen Entscheidung auf Basis eines Aufprallsensorsignals kann bisher nicht zwischen einem Zusammenstoss mit einem weichen oder einem harten Objekt unterschieden werden, was nunmehr die Erfindung ermöglicht.

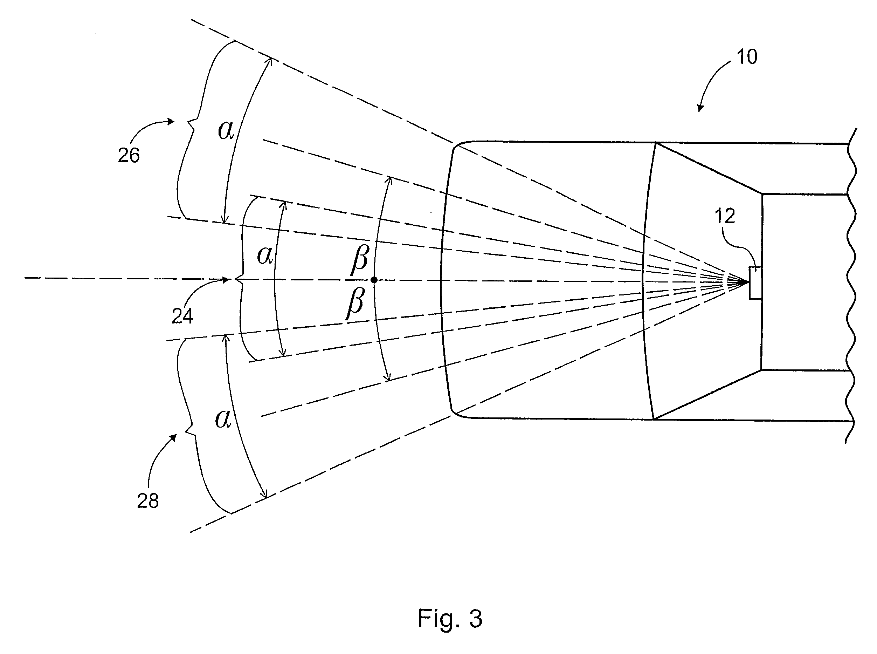

Fig. 3 zeigt schliesslich ein Kraftfahrzeug 10 in einer Ansicht von oben, um eine Anordnung von drei Emfpangsbereichen in der horizontalen Ebene des Kraftfahrzeugs zu veranschaulichen. Die drei Empfangsbereiche 24, 26 und 28 sind nebeneinander in der horizontalen Ebene des Kraftfahrzeugs mit einem Winkelabstand β von etwa 15° angeordnet. Jeder Empfangsbereich weist einen Öffnungswinkel α von etwa 15° bis 17° auf. Dadurch überlappen sich die drei Empfangsbereiche 24, 26 und 28 etwas, so dass ein grosser lückenloser Empfangsbereich gebildet wird, in dem alle Vorkommnisse erfasst werden können.

### Bezugszeichen

- 10: Kraftfahrzeug
- 12: cV-Sensor
- 14: Aufprallsensor
- 16: Anhebevorrichtung
- 18: Steuergerät
- 20: Person (Unfallgegner)
- 22: Kopf
- 24: erster Empfangsbereich
- 26: zweiter Empfangsbereich
- 28: dritter Empfangsbereich
- 30: erstes cV-Sensorsignal
- 32: zweites cV-Sensorsignal
- 34: drittes cV-Sensorsignal

## Patentansprüche

1. Vorrichtung für einen Aufprallschutz bei einem Kraftfahrzeug (10), mit
mindestens einem Aufprallsensor (14),
mindestens einem Abstandssensor (12), welcher im Bereich des Frontspiegels angeordnet ist und den Abstand (d) zu Objekten im Bereich der Motorhaube erfasst,
einem am Außenbereich des Kraftfahrzeugs (10) wirkenden aktiven Aufprallschutzsystem (16), und
einer Steuereinrichtung (18), die zum Verarbeiten von Signalen des mindestens einen Aufprallsensors (14) und des mindestens einen Abstandssensors (12) und zum Steuern des Aufprallschutzsystems (16) derart ausgebildet ist, dass sie nach Detektion eines Aufpralls durch den mindestens einen Aufprallsensor (14) ein Messzeitfenster aktiviert wird, in dem ein Signal des mindestens einen Abstandssensors (12) analysiert wird
und das Aufprallschutzsystem (16) aktiviert, wenn sich innerhalb des Messzeitfensters ein Objekt dem Abstandssensor weiter annähert.

2. Vorrichtung nach Anspruch 1, **dadurch gekennzeichnet, dass** das Aufprallschutzsystem (16) aktiviert wird, wenn der Abstand eine vorgegebene Schwelle unterschreitet.

3. Vorrichtung nach Anspruch 2,
**dadurch gekennzeichnet, dass**
das Messzeitfenster abhängig von der Geschwindigkeit des Kraftfahrzeugs eingestellt wird.

4. Vorrichtung nach einem der Ansprüche 1 bis 3,
**dadurch gekennzeichnet, dass**
die Steuereinrichtung (18) derart ausgebildet ist, dass nach Detektion eines Aufpralls bei Unterschreiten eines vorgegebenen Abstandes zum Aufprallobjekt (22) das Aufprallschutzsystem aktiviert wird.

5. Vorrichtung nach einem der Ansprüche 1 bis 4,
**dadurch gekennzeichnet, dass**
der mindestens eine Abstandssensor (12) mindestens zwei, vorzugsweise drei Empfangsoptiken aufweist, die unterschiedlich ausgerichtete Empfangsbereiche besitzen.

6. Vorrichtung nach Anspruch 5,
**dadurch gekennzeichnet, dass**
ein erster Empfangsbereich in einem Winkel von etwa 0°, ein zweiter Empfangsbereich in einem Winkel von etwa +15° und
ein dritter Empfangsbereich in einem Winkel von etwa -15° vorgesehen sind.

7. Vorrichtung nach Anspruch 5 oder 6,
**dadurch gekennzeichnet, dass**
die Empfangsbereiche derart angeordnet sind, dass sie sich überlappen und dass alle Empfangsbereiche einen lückenlosen Empfangsbereich bilden.

8. Vorrichtung nach Anspruch 5, 6 oder 7,
**dadurch gekennzeichnet, dass**
mindestens zwei Empfangsbereiche in der horizontalen Ebene des Kraftfahrzeugs nebeneinander angeordnet sind.

9. Vorrichtung nach Anspruch 15, 16 oder 17,
**dadurch gekennzeichnet, dass**
mindestens zwei Empfangsbereiche in der vertikalen Ebene des Kraftfahrzeugs nebeneinander angeordnet sind.

10. Vorrichtung nach einem der vorhergehenden Ansprüche,
**dadurch gekennzeichnet, dass**
das am Außenbereich wirkende aktive Aufprallschutzsystem eine Anhebevorrichtung (16) und/oder einen Fußgänger-Airbag umfasst.

11. Verfahren für einen Aufprallschutz bei einem Kraftfahrzeug (10), bei dem ein am Außenbereich des Kraftfahrzeug wirkendes aktives Aufprallschutzsystem abhängig von einem Signal mindestens eines Abstandssensors (12) und einem Signal mindestens eines Aufprallsensors (14) aktiviert wird, **dadurch gekennzeichnet, daß** nach Detektion eines Aufpralls durch den mindestens einen Aufprallsensor (14) ein Messzeitfenster aktiviert wird, in dem ein Signal des mindestens einen Abstandssensors (12) analysiert wird und das Aufprallschutzsystem (16) aktiviert wird, wenn sich innerhalb des Messzeitfensters ein Objekt dem Abstandssensor weiter annähert.

12. Verfahren nach Anspruch 11, **dadurch gekennzeichnet, dass** das Aufprallschutzsystem (16) aktiviert wird, wenn der Abstand eine vorgegebene Schwelle unterschreitet.

13. Verfahren nach Anspruch 12,
**dadurch gekennzeichnet, dass**
das Messzeitfenster abhängig von der Geschwindigkeit des Kraftfahrzeugs eingestellt ist.

14. Verfahren nach einem der Ansprüche 11 bis 13,
**dadurch gekennzeichnet, dass**
nach Detektion eines Aufpralls bei Unterschreiten eines vorgegebenen Abstandes (d) zum Aufprallobjekt das Aufprallschutzsystem aktiviert wird.

15. Verfahren nach einem der Ansprüche 11 bis 14,
**dadurch gekennzeichnet, dass**
der mindestens eine Abstandssensor (12) Empfangssignale aus mindestens zwei, vorzugsweise drei unterschiedlich ausgerichteten Empfangsbereichen empfängt.

16. Verfahren nach Anspruch 15,
**dadurch gekennzeichnet, dass**
Empfangssignale aus einem ersten Empfangsbereich in einem Winkel von etwa 0°, aus einem zweiten Empfangsbereich in einem Winkel von etwa +15° und aus einem dritten Empfangsbereich in einem Winkel von etwa -15° empfangen werden.

17. Verfahren nach Anspruch 15 oder 16,
**dadurch gekennzeichnet, dass**
sich die Empfangsbereiche derart überlappen, dass alle Empfangsbereiche einen lückenlosen Empfangsbereich bilden.

18. Verfahren nach Anspruch 15, 16 oder 17,
**dadurch gekennzeichnet, dass**
mindestens zwei Empfangsbereiche in der horizontalen Ebene des Kraftfahrzeugs nebeneinander angeordnet sind.

19. Verfahren nach einem der Ansprüche 15 bis 18,
**dadurch gekennzeichnet, dass**
mindestens zwei Empfangsbereiche in der vertikalen Ebene des Kraftfahrzeugs nebeneinander angeordnet sind.

20. Verfahren nach einem der Ansprüche 11 bis 19,
**dadurch gekennzeichnet, dass**
das am Außenbereich wirkende aktive Aufprallschutzsystem eine Anhebevorrichtung (16) und/oder einen Fußgänger-Airbag umfasst.

## Claims

1. An impact protection device for a motor vehicle (10) with
at least one impact sensor (14)
at least one distance sensor (12) which is arranged in the area of the front mirror and which records the distance (d) to objects in the area of the engine hood
an active impact protection system (16) that is operative on the exterior of the motor vehicle, and
a control unit (18) which is configured to process signals of the at least one impact sensor (14) and of the at least one distance sensor (12), and to control the impact protection system (16) in such a manner that after an impact has been detected by the at least one impact sensor (14), a measuring time frame is activated, in which a signal of the at least one distance sensor (12) is analysed
and the impact protection system (16) is activated when an object continues to approach the distance sensor within the measuring time frame.

2. A device according to claim 1, **characterized in that** the impact protection system (16) is activated when the distance falls below a specified threshold.

3. A device according to claim 2,
**characterized in that**
the measuring time frame is set depending on the speed of the motor vehicle.

4. A device according to any one of claims 1 to 3,
**characterized in that**
the control unit (18) is configured in such a manner that after an impact is detected when a specified distance to the impact object (22) is not reached, the impact protection system is activated.

5. A device according to any one of claims 1 to 4,
**characterized in that**
the at least one distance sensor (12) comprises at least two, preferably three receiving optics, which have differently aligned receiving ranges.

6. A device according to claim 5,
**characterized in that**
a first receiving range is provided at an angle of approximately 0°, a second receiving range is provided at an angle of approximately +15° and a third receiving range is provided at an angle of approximately -15°.

7. A device according to claim 5 or 6,
**characterized in that**
the receiving ranges are arranged in such a manner that they overlap and that all receiving ranges form a seamless receiving range.

8. A device according to claim 5, 6 or 7,
**characterized in that**
at least two receiving ranges are arranged adjacent to each other on the horizontal plane of the motor vehicle.

9. A device according to claim 15, 16 or 17,
**characterized in that**
at least two receiving ranges are arranged adjacent to each other on the vertical plane of the motor vehicle.

10. A device according to any one of the preceding claims,
**characterized in that**
the active impact protection system that is operative on the exterior comprises a raising device (16) and/or a pedestrian airbag.

11. A method for impact protection with a motor vehicle (10), in which an active impact protection system that is operative on the exterior of the motor vehicle is activated depending on a signal of at least one distance sensor (12) and on a signal of at least one impact sensor (14), **characterized in that** when an impact is detected by the at least one impact sensor (14), a measuring time frame is activated, in which a signal of the at least one distance sensor (12) is analysed and the impact protection system (16) is activated when an object continues to approach the distance sensor within the measuring time frame.

12. A method according to claim 11, **characterized in that** the impact protection system (16) is activated when the distance falls below a specified threshold.

13. A method according to claim 12,
**characterized in that**
the measuring time frame is set depending on the speed of the motor vehicle.

14. A method according to any one of claims 11 to 13,
**characterized in that**
when an impact is detected when a specified distance (d) from the impact object is not reached, the impact protection system is activated.

15. A method according to any one of claims 11 to 14,
**characterized in that**
the at least one distance sensor (12) receives receiving signals of at least two, preferably three differently aligned receiving ranges.

16. A method according to claim 15,
**characterized in that**
receiving signals from a first receiving range are received at an angle of approximately 0°, and from a second receiving range at an angle of approximately +15°, and from a third receiving range, at an angle of approximately -15°.

17. A method according to claim 15 or 16,
**characterized in that**
the receiving ranges overlap in such a manner that all receiving ranges form a seamless receiving range.

18. A method according to claim 15, 16 or 17,
**characterized in that**
at least two receiving ranges are arranged adjacent to each other on the horizontal plane of the motor vehicle.

19. A method according to any one of claims 15 to 18,
**characterized in that**
at least two receiving ranges are arranged adjacent to each other on the vertical plane of the motor vehicle.

20. A method according to any one of claims 11 to 19,
**characterized in that**
the active impact protection system that is operative on the exterior comprises a lifting device (16) and/or a pedestrian airbag.

## Revendications

1. Dispositif de protection antichoc pour un véhicule automobile (10), comprenant:
au moins un capteur d'impact (14),
au moins un capteur de distance (12) disposé au niveau du rétroviseur central et saisissant la distance (d) à des objets au niveau du capot du moteur,
un système de protection antichoc (16) actif, agissant dans la zone extérieure au véhicule automobile (10), et
un dispositif de commande (18) réalisé pour le traitement de signaux du ou des capteurs d'impact (14) et du ou des capteurs de distance (12) et pour la commande du système de protection antichoc (16), de manière à activer une fenêtre temporelle de mesure après détection d'une collision par le ou les capteurs d'impact (14), dans laquelle un signal du ou des capteurs de distance (12) est analysé,
et à activer le système de protection antichoc (16) si un objet se rapproche du capteur de distance à l'intérieur de la fenêtre temporelle de mesure.

2. Dispositif selon la revendication 1, **caractérisé en ce que** le système de protection antichoc (16) est activé quand la distance devient inférieure à un seuil défini.

3. Dispositif selon la revendication 2, **caractérisé en ce que** la fenêtre temporelle de mesure est réglée en fonction de la vitesse du véhicule automobile.

4. Dispositif selon l'une des revendications 1 à 3, **caractérisé en ce que** le dispositif de commande (18) est réalisé de manière à activer le système de protection antichoc (16) après détection d'une collision si la distance à l'objet d'impact (22) devient inférieure à une distance définie.

5. Dispositif selon l'une des revendications 1 à 4, **caractérisé en ce que** le ou les capteurs de distance (12) comprennent au moins deux, de préférence trois optiques de réception dotées de champs de réception d'orientations différentes.

6. Dispositif selon la revendication 5, **caractérisé en ce que** sont prévus un premier champ de réception suivant un angle de 0° environ, un deuxième champ de réception suivant un angle de +15° environ et un troisième champ de réception suivant un angle de -15° environ.

7. Dispositif selon la revendication 5 ou la revendication 6, **caractérisé en ce que** les champs de réception sont disposés de manière à se chevaucher et à former tous un champ de réception sans interruption.

8. Dispositif selon la revendication 5, la revendication 6 ou la revendication 7, **caractérisé en ce qu'**au moins deux champs de réception sont disposés côte à côte sur le plan horizontal du véhicule automobile.

9. Dispositif selon la revendication 5, la revendication 6 ou la revendication 7, **caractérisé en ce qu'**au moins deux champs de réception sont disposés côte à côte sur le plan vertical du véhicule automobile.

10. Dispositif selon l'une des revendications précédentes, **caractérisé en ce que** le système de protection antichoc actif, agissant dans la zone extérieure comprend un dispositif de levage (16) et/ou un airbag pour piéton.

11. Procédé de protection antichoc pour un véhicule automobile (10), où un système de protection antichoc actif, agissant dans la zone extérieure au véhicule automobile est activé en fonction d'un signal d'au moins un capteur de distance (12) et d'un signal d'au moins un capteur d'impact (14), **caractérisé en ce qu'**une fenêtre temporelle de mesure après détection d'une collision par le ou les capteurs d'impact (14), dans laquelle un signal du ou des capteurs de distance (12) est analysé, et **en ce que** le système de protection antichoc (16) est activé si un objet se rapproche du capteur de distance à l'intérieur de la fenêtre temporelle de mesure.

12. Procédé selon la revendication 11, **caractérisé en ce que** le système de protection antichoc (16) est activé quand la distance devient inférieure à un seuil défini.

13. Procédé selon la revendication 12, **caractérisé en ce que** la fenêtre temporelle de mesure est réglée en fonction de la vitesse du véhicule automobile.

14. Procédé selon l'une des revendications 11 à 13, **caractérisé en ce que** le système de protection antichoc (16) est activé après détection d'une collision si la distance à l'objet d'impact devient inférieure à une distance (d) définie.

15. Procédé selon l'une des revendications 11 à 14, **caractérisé en ce que** le ou les capteurs de distance (12) reçoivent des signaux de réception d'au moins deux, de préférence trois champs de réception d'orientations différentes.

16. Procédé selon la revendication 15, **caractérisé en ce que** sont reçus des signaux de réception d'un premier champ de réception suivant un angle de 0° environ, d'un deuxième champ de réception suivant un angle de +15° environ et d'un troisième champ de réception suivant un angle de -15° environ.

17. Procédé selon la revendication 15 ou la revendication 16, **caractérisé en ce que** les champs de réception se chevauchent de manière à former tous un champ de réception sans interruption.

18. Procédé selon la revendication 15, la revendication 16 ou la revendication 17, **caractérisé en ce qu'**au moins deux champs de réception sont disposés côte à côte sur le plan horizontal du véhicule automobile.

19. Procédé selon l'une des revendications 15 à 18, **caractérisé en ce qu'**au moins deux champs de réception sont disposés côte à côte sur le plan vertical du véhicule automobile.

20. Procédé selon l'une des revendications 11 à 19, **caractérisé en ce que** le système de protection antichoc actif, agissant dans la zone extérieure comprend un dispositif de levage (16) et/ou un airbag pour piéton.
